# EUROPEAN PATENT APPLICATION

(11) **EP 4 407 533 A1**
(43) Date of publication of application: **31.07.2024**
(21) Application number: 24153938.6
(22) Date of filing: 25.01.2024
(51) Int. Cl.: G06Q 10/0637, G06Q 50/06

(54) **METHODS FOR COMMERCIAL REAL ESTATE DECARBONIZATION FORECASTING AND DEVICES THEREOF**

(30) Priority: 27.01.2023 US 202318102225
(71) Applicant: Jones Lang Lasalle, Ip, Inc., Chicago, IL 60601 (US)
(72) Inventor: SEGERBLOM, Chris, Manhattan Beach, 90266 (US); CHUNG, Crystal, San Diego, 92103 (US); PERALTA, Francisco, San Diego, 92108 (US); LI, Jingci, San Francisco, 94105 (US); BROWN, Matthew, Denver, 80220 (US); BAKER, Rob, Phoenix, 85085 (US); LEE, Wanfung, Irvine, 92604 (US); WONG, YatMan, Artesia, 90701 (US)
(74) Representative: Savi, Massimiliano

(57) **Abstract**

Methods, non-transitory computer readable media, and decarbonization forecasting devices are disclosed that obtain scenario data, building data for building(s), and action data for decarbonization actions. A business-as-usual (BAU) pathway is generated based on the building data, a target pathway is generated based on the scenario data, and a decarbonization pathway is generated based on the action data and a received selection of the decarbonization actions associated with the building(s). A modeling interface is generated that includes an editing pane adjacent to a visualization pane graphically displaying one or more monetary outputs and the energy or emissions difference between the BAU, target, and decarbonization pathways. The visualization pane is updated to adjust the BAU, target, or decarbonization pathway(s) and the monetary output(s) based on a modification received via the editing pane of the scenario, building, or action data of the decarbonization action(s) to thereby display an impact of the modification.

## Description

### FIELD

This technology generally relates to sustainability analytics and visualizations and, more particularly, to methods and devices for commercial real estate decarbonization forecasting.

### BACKGROUND

Commercial real estate properties and portfolios are increasingly susceptible to losing value as a result of climate transition risk and changing market expectations and laws related to a building's carbon footprint. Thus, commercial real estate investors and occupiers are under pressure to mitigate the impact of climate change. Many of these organizations are publicly committing to science-based decarbonization targets and/or net zero carbon across their real estate portfolio by specified future dates.

However, real estate owners and managers analyzing sustainability do not currently have practical tools for quickly assessing which buildings align with particular targets. For companies with large real estate portfolios, a significant barrier to understanding their climate transition risk is lack of data. Specifically, few companies know exactly how much energy each of their buildings is using and even fewer have insight into what they could do to reduce their buildings' energy and emissions intensity, let alone in an efficient manner that considers return on investment or progress toward an established goal or target, for example.

Some current real estate professionals attempt to navigate climate transition risk by building spreadsheet models. These models are built in silos, detached from well-maintained data sources, and they tend to be built either top-down or bottom-up depending on how much data can be obtained about the relevant buildings.

However, in practice, real estate data is very heterogeneous and companies tend to have detailed information about some buildings and limited information about others. The buildings for which companies have limited data will render the bottom-up models inaccurate and the top-down models will ignore valuable data points available for the other buildings for which companies have more fulsome data. Accordingly, there is currently no efficient or effective way for commercial real estate owners and managers to analyze climate transition risk or forecast the results of decarbonization efforts.

### SUMMARY

A method for commercial real estate decarbonization forecasting is disclosed along with non-transitory computer readable media and decarbonization forecasting devices s that are configured to perform the method. Thus, the method can be implemented by one or more decarbonization forecasting devices that include memory including programmed instructions stored thereon and one or more processors configured to execute the stored programmed instructions to perform the method. In other examples, a non-transitory computer readable medium having stored thereon instructions is disclosed that includes executable code that, when executed by one or more processors, causes the one or more processors to perform the method.

The method in some examples includes obtaining scenario data, building data for building(s), and action data for decarbonization actions. A business-as-usual (BAU) pathway is generated based on the building data, a target pathway is generated based on the scenario data, and a decarbonization pathway is generated based on the action data and a received selection of the decarbonization actions associated with the building(s). A modeling interface is generated that includes an editing pane adjacent to a visualization pane graphically displaying one or more monetary outputs and the energy or emissions difference between the BAU, target, and decarbonization pathways. The visualization pane is updated to adjust the BAU, target, or decarbonization pathway(s) and the monetary output(s) based on a modification received via the editing pane of the scenario, building, or action data of the decarbonization action(s) to thereby display an impact of the modification.

This technology provides a number of advantages including methods, non-transitory computer readable media, and decarbonization forecasting devices that advantageously enable visualization of climate transition risks and decarbonization forecasting, and generation of decarbonization action plans to address such climate transition risks. This technology provides improved graphical interfaces that allow users to visualize the risk of a portfolio of buildings missing its energy or emissions targets and generates budgets associated with selected combinations of decarbonization actions needed to get and keep the portfolio on track with the targets.

This technology also facilitates efficient simulation of the impact that various decarbonization strategies will have on a building portfolio's future carbon footprint and cash flows based on different combinations of buildings and decarbonization actions associated with those buildings. The technology described herein also employs parametric models to estimate current building energy use and the cost/benefit of different decarbonization actions.

Thus, this technology facilitates more effective strategic planning and analysis to inform due diligence regarding allocation of resources for decarbonization efforts. The improved graphical interfaces and visualizations of this technology advantageously allow for the strategic planning and analysis of key performance indicators at the building-level, portfolio-level, and sub-portfolio-level.

### BRIEF DESCRIPTION OF THE DRAWINGS

FIG. 1 is a block diagram of an exemplary network environment with a decarbonization forecasting device;
FIG. 2 is a block diagram of an exemplary decarbonization forecasting device;
FIG. 3 is a flowchart of an exemplary method for commercial real estate decarbonization forecasting;
FIG. 4 is an exemplary building definition interface;
FIG. 5 is an exemplary scenario definition interface;
FIG. 6 is an exemplary modeling interface with editing and visualization panes;
FIG. 7 is an exemplary building selection interface;
FIG. 8 is an exemplary modeling interface with a populated editing pane and a visualization pane graphically presenting exemplary business-as-usual (BAU) and target pathways;
FIG. 9 is an exemplary action selection interface;
FIG. 10 is an exemplary action definition interface;
FIG. 11 is an exemplary modeling interface with a populated building pane and a visualization pane graphically presenting exemplary BAU, target, and decarbonization pathways; and
FIG. 12 is a flow diagram of an exemplary method for commercial real estate decarbonization forecasting.

### DETAILED DESCRIPTION

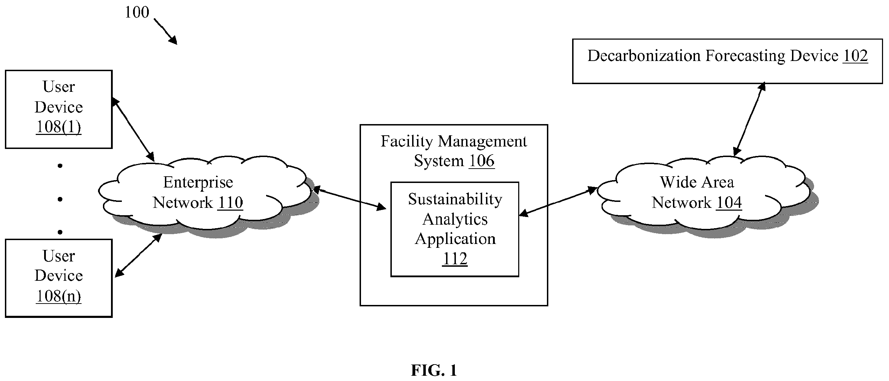

Referring to FIG. 1, an exemplary network environment 100 is illustrated that includes a decarbonization forecasting device 102 coupled, via a wide area network (WAN) 104, to a facility management system 106, which is coupled to user devices 108(1)-108(n) by an enterprise network 110. The network environment 100 may include other network devices such as one or more routers or switches, for example, which will not be described herein. This technology provides a number of advantages including methods, non-transitory computer readable media, and decarbonization forecasting devices that generate improved graphical user interfaces that facilitates more effective simulation and visualization of the financial, energy and emissions impacts of decarbonization actions on building portfolios.

In this particular example, the user devices 108(1)-108(n), facility management system 106, and decarbonization forecasting device 102 are disclosed in FIG. 1 as dedicated hardware devices. However, one or more of the user devices 108(1)-108(n), facility management system 106, or decarbonization forecasting device 102 can also be implemented in software within one or more other devices in the network environment 100. As one example, the decarbonization forecasting device 102, as well as any of its components or applications, can be implemented as software executing on the facility management system 106, and many other permutations and types of implementations and network topologies can also be used in other examples.

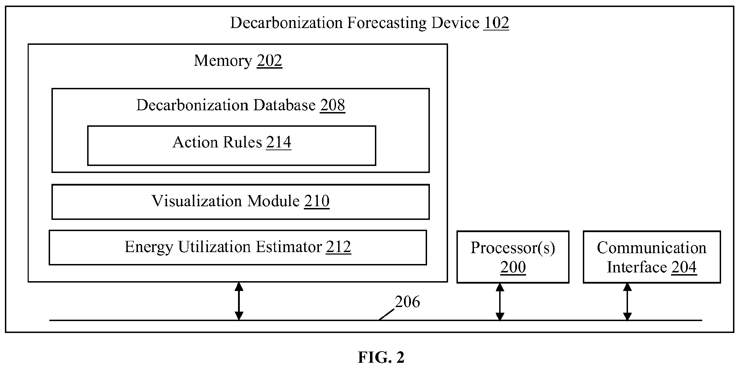

Referring to FIGS. 1-2, the decarbonization forecasting device 102 of the network environment 100 may perform any number of functions, including generating, and providing to the user devices 108(1)-108(n) via the facility management system 106, interactive graphical interfaces configured to provide automatic, real-time updates to graphical presentations of decarbonization pathways in response to building and/or decarbonization action adjustments, as described and illustrated in more detail below. The decarbonization forecasting device 102 in this example includes processor(s) 200, a memory 202, and a communication interface 204, which are coupled together by a bus 206, although the decarbonization forecasting device 102 can include other types or numbers of elements in other configurations.

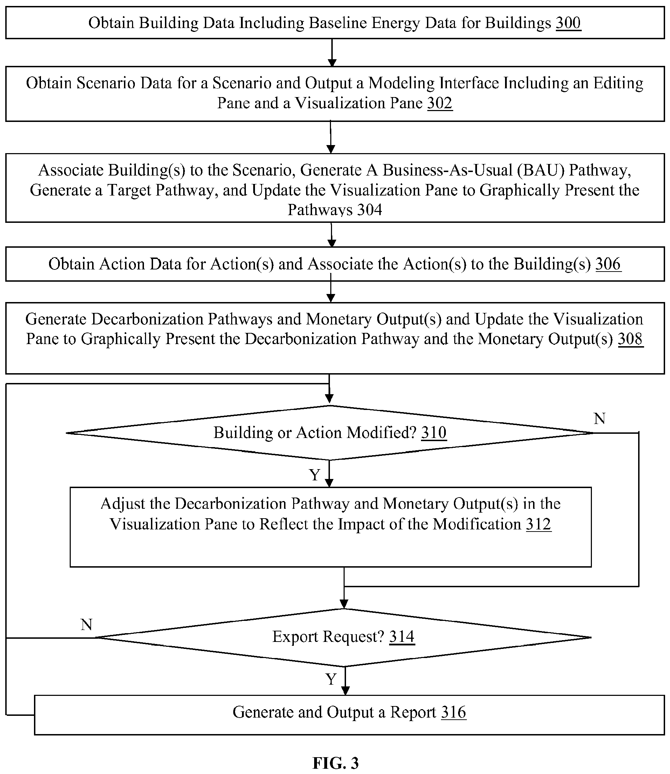

The processor(s) 200 of the decarbonization forecasting device 102 may execute programmed instructions stored in the memory 202 of the decarbonization forecasting device 102 for any number of the functions described and illustrated herein (e.g., with reference to FIG. 3). The processor(s) 200 may include one or more central processing units (CPUs) or general purpose processors with one or more processing cores, for example, although other types of processor(s) can also be used.

The memory 202 of the decarbonization forecasting device 102 stores these programmed instructions for one or more aspects of the present technology as described and illustrated herein, although some or all of the programmed instructions could be stored elsewhere. A variety of different types of memory storage devices, such as random access memory (RAM), read only memory (ROM), hard disk, solid state drives, flash memory, or other computer readable medium which is read from and written to by a magnetic, optical, or other reading and writing system that is coupled to the processor(s) 200, can be used for the memory 202.

Accordingly, the memory 202 can store applications that can include computer executable instructions that, when executed by the decarbonization forecasting device 102, cause the decarbonization forecasting device 102 to perform actions, such as to transmit, receive, or otherwise process network messages and requests, for example, and to perform other actions described and illustrated below with reference to FIGS. 3-12. The application(s) can be implemented as components of other applications, operating system extensions, and/or plugins, for example.

Further, the application(s) may be operative in a cloud-based computing environment with access provided via a software-as-a-service model. The application(s) can be executed within or as virtual machine(s) or virtual server(s) that may be managed in a cloud-based computing environment. Also, the application(s), and even the decarbonization forecasting device 102 itself, may be located in virtual server(s) running in a cloud-based computing environment rather than being tied to specific physical network computing devices. Also, the application(s) may be running in virtual machines (VMs) executing on the decarbonization forecasting device 102 and managed or supervised by a hypervisor.

In this particular example, the memory 202 includes a decarbonization database 208, a visualization module 210, and an energy utilization estimator 212. The decarbonization database 208 in this example stores scenario data, building data, and action data for any number of enterprises and/or users. The scenario data includes an energy or emissions intensity threshold and an associated timeframe that relates to a target that an enterprise may desire to achieve. The scenario data can also include the particular buildings and decarbonization actions and other information associated with each scenario, as saved by a user, for example. The building data can include baseline energy data, construction date, size, and/or utility information, for example, for each of the buildings.

The action data includes rules for any number of decarbonization actions an enterprise can take to reduced energy utilization and/or emissions output, for example. Exemplary decarbonization actions can include installing solar panels or upgrading HVAC systems to have controls utilizing artificial intelligence, although any number or types of decarbonization actions can be defined by users within the decarbonization forecasting device 102. The action data includes action rules 214 for each of the decarbonization actions that define the generation of a start date, an end date, a required capital expenditure, an operational expenditure savings, or an impact level, for example, although other types of action rules can also be used.

The visualization module 210 is configured to generate interactive graphical interfaces that facilitate intake of scenario, building, and/or action data and output modeling interfaces including an editing pane and a visualization pane. The editing pane facilitates modifications of buildings or actions within a scenario and the visualization pane is configured to be responsive to the modifications by recalculating and graphically displaying a decarbonization pathway. The visualization pane also illustrates a business-as-usual (BAU) pathway and a target pathway to allow users to visualize the impact of decarbonization efforts.

The energy utilization estimator 212 in this example is configured to estimate the energy utilization of a particular building based on the associated building data. The energy utilization estimator 212 can store predefined rules for determining energy utilization and/or emissions output for a building based on location, age, size, or any other portion of the building data, for example. In some examples, the energy utilization estimator 212 uses historical data obtained from a number of facility management systems across a number of enterprises to intelligently estimate the energy utilization and/or emissions output by a building. Accordingly, the energy utilization estimator 212 effectively fills in the gaps for certain buildings of a portfolio for which energy data is not included in the building data or maintained by the associated facility management system 106.

The communication interface 204 of the decarbonization forecasting device 102 operatively couples and communicates between the decarbonization forecasting device 102 and facility management system 106, which are coupled together at least in part by the WAN 104, although other types or numbers of communication networks or systems with other types or numbers of connections or configurations to other devices or elements can also be used.

By way of example only, the WAN 104 and/or enterprise network 110 can use TCP/IP over Ethernet and industry-standard protocols, although other types or numbers of protocols or communication networks can be used. The WAN 104 and/or enterprise network 110 in this example can employ any suitable interface mechanisms and network communication technologies including, for example, Ethernet-based Packet Data Networks (PDNs).

While the decarbonization forecasting device 102 is illustrated in this example as including a single device, the decarbonization forecasting device 102 in other examples can include a plurality of devices each having one or more processors (each processor with one or more processing cores) that implement one or more steps of this technology. In these examples, one or more of the devices can have a dedicated communication interface or memory. Alternatively, one or more of the devices can utilize the memory, communication interface, or other hardware or software components of one or more other devices included in the decarbonization forecasting device 102. Additionally, one or more of the devices that together comprise the decarbonization forecasting device 102 in other examples can be standalone devices or integrated with one or more other devices or apparatuses.

The facility management system 106 of the network environment 100 includes one or more processors, a memory hosting a sustainability analytics application 112, and a communication interface, which are coupled together by a bus or other communication link, although other numbers and types of network devices could be used. The facility management system 106 in this example executes the sustainability analytics application 112, which is configured to centralize utility and environmental data to manage and monitor cost and performance. The sustainability analytics application 112 can also collect, measure, and report on greenhouse gas (GHG) emissions and sustainability performance, for example.

In some examples, the decarbonization forecasting device 102 provides interfaces (e.g., the modeling interface described and illustrated in more detail below) as a module or plugin that is integrated with the sustainability analytics application 112. In yet other examples, the sustainability analytics application 112 itself it hosted by the decarbonization forecasting device 102 and provided to the facility management system 106 in a Software-as-a-Service (SaaS) deployment, and other configurations and topologies can also be used in other examples.

Although the exemplary network environment 100 with the user devices 108(1)-108(n), facility management system 106, decarbonization forecasting device 102, WAN 104, and enterprise network 110 are described and illustrated herein, other types or numbers of systems, devices, components, or elements in other topologies can be used. It is to be understood that the systems of the examples described herein are for exemplary purposes, as many variations of the specific hardware and software used to implement the examples are possible, as will be appreciated by those skilled in the relevant art(s).

One or more of the components depicted in the network environment 100, such as the user devices 108(1)-108(n), facility management system 106, or decarbonization forecasting device 102, for example, may be configured to operate as virtual instances on the same physical machine. In other words, one or more of the user devices 108(1)-108(n), facility management system 106, or decarbonization forecasting device 102 may operate on the same physical device rather than as separate devices communicating through WAN 104 and/or enterprise network 110. Additionally, there may be more user devices, enterprise networks, facility management systems and/or decarbonization forecasting devices than illustrated in FIG. 1.

The examples of this technology may also be embodied as one or more non-transitory computer readable media having instructions stored thereon, such as in the memory 202, for one or more aspects of the present technology, as described and illustrated by way of the examples herein. The instructions in some examples include executable code that, when executed by one or more processors, such as the processor(s) 200, cause the processors to carry out steps necessary to implement the methods of the examples of this technology that are described and illustrated herein.

Referring to FIG. 3, a flowchart of an exemplary method for commercial real estate decarbonization forecasting is illustrated. In step 300 in this example, the decarbonization forecasting device 102 obtains building data including baseline energy data for a plurality of buildings that may be associated with the same portfolio or enterprise, for example. A building may represent a subset of a real or imaginary building if, for example, the user wishes to control model inputs on a tenant-by-tenant basis.

The building data can include a building type, building location (e.g., country or geolocation), building floor area, year built, energy sources, and/or system inventory, for example. The building data can be obtained automatically from the facility management system 106 and/or the building data can be manually input by a user of one of the user devices 108(1)-108(n) via the facility management system 106, for example.

The baseline energy data can be obtained in the same manner as other portions of the building data. Alternatively, the baseline energy data can be obtained for one or more of the buildings based on an estimate generated from other portions of the building data. For example, the decarbonization forecasting device 102 can use the year built, geolocation, floor area, and system inventory to estimate the baseline energy data for a particular building. The estimate can be informed by verified baseline energy data provided by other users associated with the same or a different enterprise for similarly situated buildings. Additionally, the baseline energy data can include energy utilization and/or greenhouse gas emissions, for example.

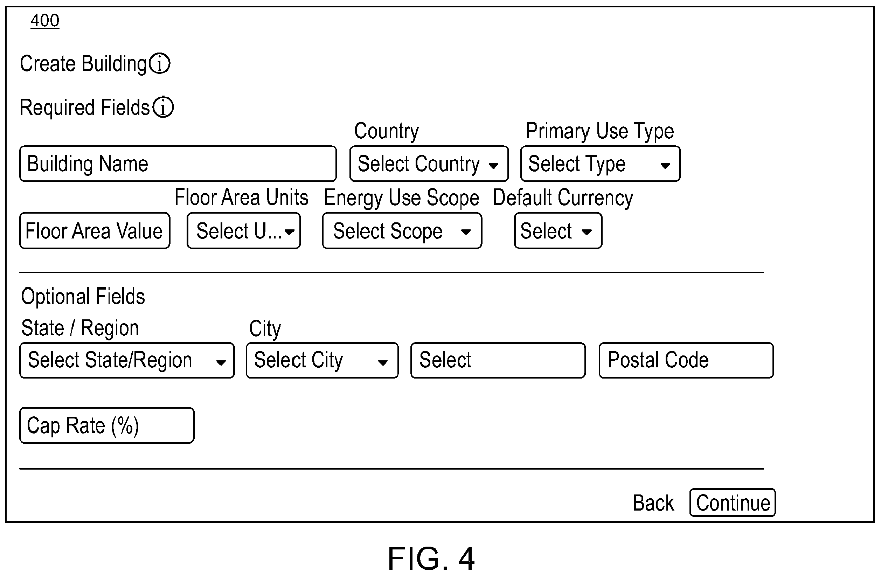

Referring to FIG. 4, an exemplary building definition interface 400 is illustrated. The building definition interface 400 can be provided by the decarbonization forecasting device 102 to one of the user devices 108(1)-108(n) via the sustainability analytics application 112, for example, based on a user selection from an editing pane of a modeling interface, which is described and illustrated in more detail below. The building definition interface 400 in this example includes input fields for building name, country, primary use type (e.g., healthcare, hotel, office, retail, residential, etc.), floor area, energy use scope (e.g., landlord and/or tenant), default currency, address, and cap rate, although other types of input builds and building data can be used in other examples.

Referring back to FIG. 3., in step 302, the decarbonization forecasting device 102 obtains scenario data for a scenario and outputs a modeling interface that includes an editing pane and a visualization pane. The scenario data in this example includes an energy or emissions intensity threshold and an associated timeframe. The energy or emissions intensity threshold represents a target or goal energy utilization or emissions output and the timeframe represents a date by which the energy or emissions intensity threshold is to be reached. Accordingly, a scenario is a construct that includes a collection of buildings, action(s) associated with the buildings, and target information that can be saved or exported into a report by a user along with the modeling interface visualizations to facilitate decarbonization planning and forecasting.

The modeling interface includes an editing pane from which buildings and decarbonization actions can be added or modified within a scenario or simulation. The editing pane is adjacent to a visualization pane that includes monetary outputs and graphically presents pathways or energy or emissions for a portfolio of buildings plotted over time. Accordingly, users can advantageously modify buildings, or decarbonization actions undertaken with respect to the buildings as part of a particular scenario, and automatically the resulting changes in monetary outputs and pathways will be displayed in the adjacent visualization pane.

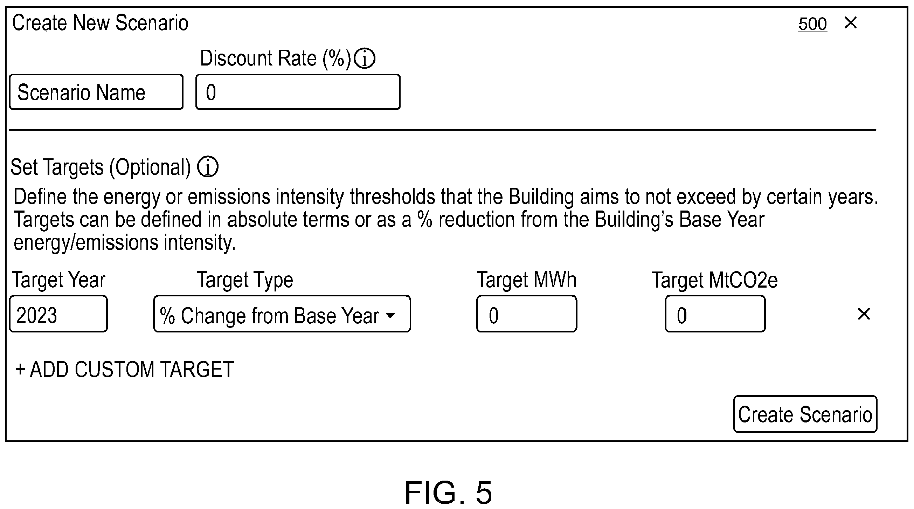

Referring to FIG. 5, an exemplary scenario definition interface 500 is illustrated. The scenario definition interface 500 can be provided by the decarbonization forecasting device 102 to one of the user devices 108(1)-108(n) via the sustainability analytics application 112, for example, based on a user selection from an editing pane of a modeling interface, which is described and illustrated in more detail below. The scenario definition interface 500 in this example includes input fields for scenario name, discount rate to be associated with the scenario, which is used to discount cash flows and calculate the net present value, along with additional input fields for optional target data of the scenario data, such as a target timeframe (i.e., year), a target type (e.g., percentage change from the base year or a specific value), a target energy utilization, or a target emissions output, although other scenario data can also be used in other examples.

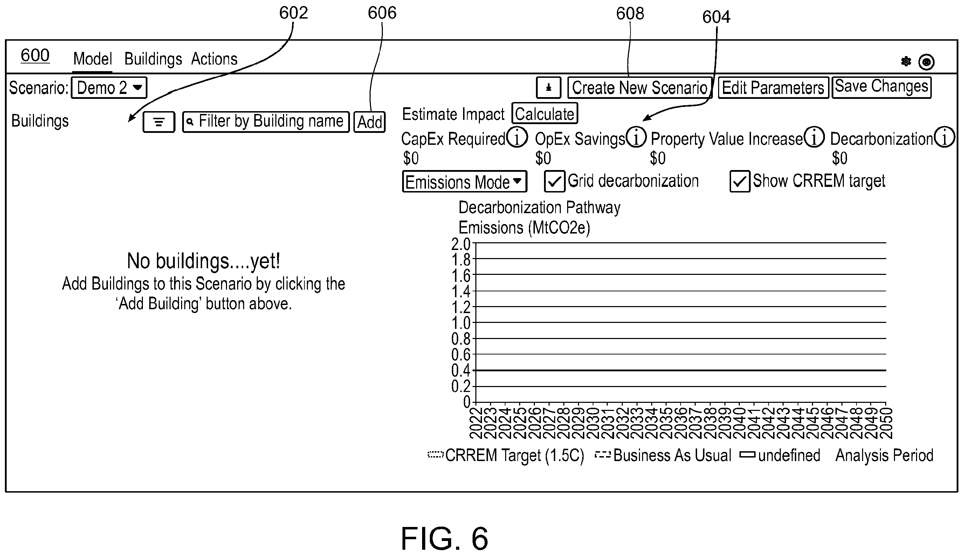

Referring to FIG. 6, an exemplary modeling interface 600 with an editing pane 602 and an adjacent visualization pane 604 is illustrated. The modeling interface 600 illustrated in FIG. 6 can be generated and provided by the decarbonization forecasting device 102 upon initial request from one of the user devices 108(1)-108(n). The modeling interface 600 includes an add button 606, which results in a dropdown menu facilitating selection of a building or action to be added to the scenario from a stored library. Selection of the building option from the dropdown menu can be configured to generate a building selection interface. Upon defining and selecting buildings, the editing pane 602 can be populated with an indication of the buildings, as explained in more detail below.

The modeling interface 600 also includes a create scenario button 608, which can be configured to generate the scenario definition interface 500 upon selection by a user. Other arrangements for the modeling interface 600 and methods for facilitating generation of building data and/or scenario data can also be used in other examples.

Referring back to FIG. 3, in step 304, the decarbonization forecasting device 102 associates building(s) to a scenario, generates a business-as-usual (BAU) pathway and a target pathway, and updates the visualization pane to graphically present the pathways. The building(s) can be associated with the scenario via selection by the user via the editing pane 602. Upon selection of a set of buildings in a portfolio, for example, the modeling interface 600 is configured to update the visualization pane to display a BAU pathway generated from the scenario data for the scenario and the building data for each of the selected buildings. The BAU pathway represents the energy utilization or emissions for the portfolio of buildings over time without consideration of decarbonization actions.

The target pathway can be represent a custom target generated based on the target data input via the scenario definition interface 500 and/or a default target generated based on obtained, publicly-available, science-based target data for the types of buildings in the scenario. The target pathway gives enterprises a reference target they can adopt or use to inform setting of their own custom targets, which associated users could then input as scenario data. The visualization pane can display the default and custom target pathways contemporaneously in some examples.

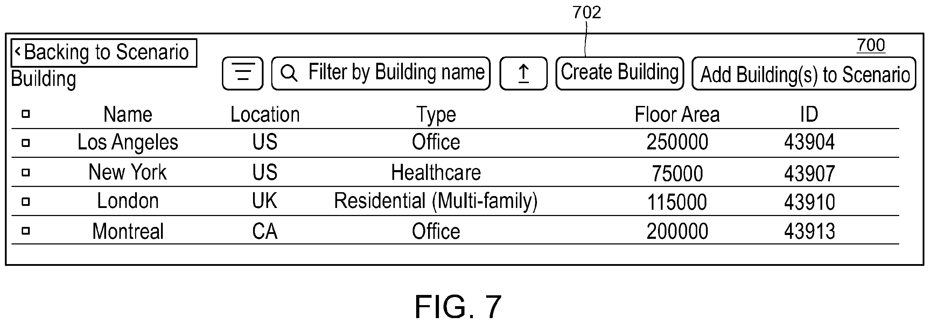

Referring to FIG. 7, an exemplary building selection interface 700 is illustrated. As explained above, the building selection interface 700 can be displayed following user interaction with the dropdown menu and add button 606. The building selection interface 700 can include selectable indications of buildings for which building data was previously received and stored. The buildings can be stored in association with a particular user or enterprise, for example. The building selection interface 700 also includes a create building button 702 that, when selected, can be configured to generate the building definition interface 400.

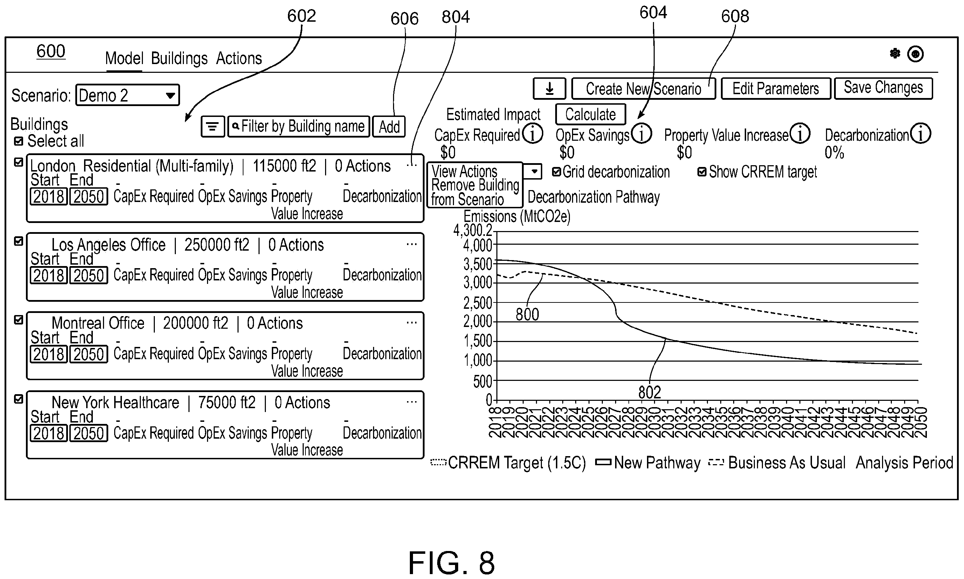

Referring to FIG. 8, the exemplary modeling interface 600 with a populated building pane 602 and a visualization pane 604 graphically presenting an exemplary BAU pathway 800 and an exemplary target pathway 802 is illustrated. Upon selection of buildings via the building selection interface 700, the editing pane 602 is populated with an indication of the selected buildings. In this particular example, four buildings (i.e., named London, Los Angeles, Montreal, and New York) are identified in the editing pane 602. Each identification of a building is selectable via a checkbox to reflect inclusion in or exclusion from the scenario, and includes an associated ellipses button 804 that facilitates the modification of decarbonization actions associated with the building, as described and illustrated in more detail below.

Referring back to FIG. 3, in step 306, the decarbonization forecasting device 102 obtains action data for decarbonization actions and associates the decarbonization actions to the respective building(s). The decarbonization actions correspond to real or theoretical measures that have or will influence the carbon pathway of a building after being implemented. For example, installing solar panels on the roof is one way of reducing a building's carbon footprint. Decarbonization actions typically require a capital investment, they may increase or decrease the operating expenses of the associated building, and they impact the energy utilization and/or greenhouse gas (GHG) emissions of the building.

In some examples, the action data includes rule(s) for generating, for each of the decarbonization actions and based on the building data, a start date, an end date, a required capital expenditure, an operational expenditure savings, or an impact level. Based on the start date and the end date, this technology advantageously supports bundling interventions or decarbonization actions with different time horizons for the same or different buildings within a portfolio, for example.

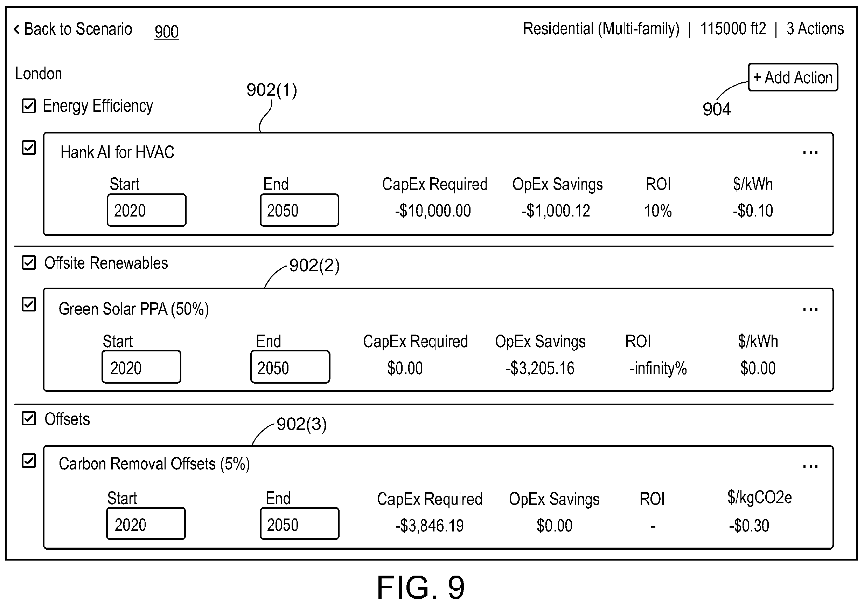

Referring to FIG. 9, an exemplary action selection interface 900 is illustrated. The action selection interface 900 can be generated and displayed upon selection of the ellipses button 802 for the London building and the view actions selection from the resulting dropdown menu, for example. The actions 902(1)-(3) can be retrieved from a stored library and provided via the action selection interface 900 for adjustment and selection by a user for particular buildings. In this example, the start date and end dates are reflected by adjustable input fields, but other action data can also be available for manual adjustment in other examples.

In some examples, the capital expenditure, operational savings, return on investment, and cost per unit impact (e.g. kWh) are generated from the application of action rules, established by a user upon creation of the action, to building data. The action selection interface 900 in this example includes an add action button 904 that facilitates creation of a decarbonization action and definition of the associated action rules.

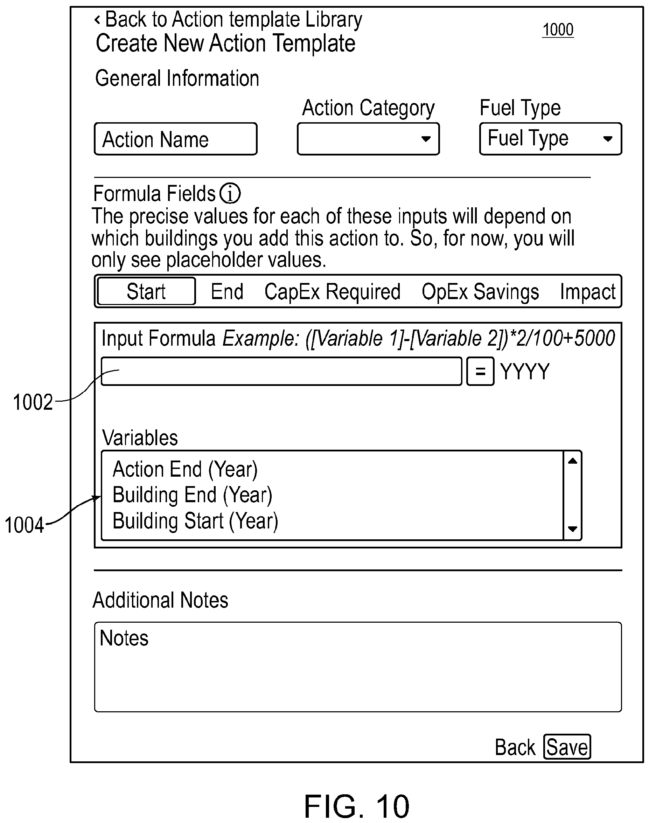

Referring to FIG. 10, an exemplary action definition interface 1000 is illustrated. The action definition interface 1000 can be displayed in response to selection of the add action button 904 of the action selection interface 900, for example. The action definition interface 1000 allows a user to generate a decarbonization action template that can be stored in a library within the decarbonization database 208, for example. In this particular example, the action definition interface 1000 includes input fields for action name, and category (e.g., electrification, onsite renewables, or offset), and fuel type (e.g., electricity, natural or gas).

The action definition interface 1000 also includes an action rule input field 1002 for input of a formula or rule associated with various parameters (e.g., start, end, capital expenditure requires, operational expenditure savings, and impact) for the action. In this particular example, the action definition interface 1000 also includes a set of selectable variables 1004 that, upon selection, populate the action rule input field for ease of defining an action rule. Other types of action data and/or other methods for establishing action rules can also be used in other examples. Upon saving, the decarbonization forecasting device 102 can add the decarbonization action to the library for selection by the user or other users associated with the same or a different enterprise, for example.

Referring back to FIG. 3, in step 308, the decarbonization forecasting device 102 generates a decarbonization pathway and monetary output(s) and updates the visualization pane 604 to graphically present the decarbonization pathway and the monetary output(s) along with the BAU pathway 800 and target pathway 802 previously presented in step 304. The decarbonization pathway graphically illustrates the energy utilization (e.g., kWh) and/or greenhouse gas (GHG) emissions (e.g., kgCO2e) over time for the selected buildings and the decarbonization actions selected for those buildings.

The decarbonization pathway is generated based on the energy or emissions reductions from the BAU for the selected buildings as a result of the implementation of the selected decarbonization actions, as determined based on the result of the start, end, and/or impact action rules associated with those decarbonization actions. Accordingly, the updated visualization pane 604 advantageously displays an energy or emissions difference between the BAU, target, and decarbonization pathways.

The monetary outputs in this example are generated based on an application of the action rules for the selected decarbonization actions to a portion of the building data for the selected buildings, the action data for one or more of the selected decarbonization actions, and/or the scenario data. In some examples, the monetary outputs include a required capital expenditure for the selected decarbonization actions, an operational expenditure savings as a result of implementation of the selected decarbonization actions, and/or a property value increase as a result of implementation of the selected decarbonization actions, although other monetary values can also be used in other examples. Optionally, the decarbonization forecasting device 102 can leverage action data and/or feedback across users over time, and/or input from third party data sources, to improve the accuracy of the monetary outputs and the various generated pathways.

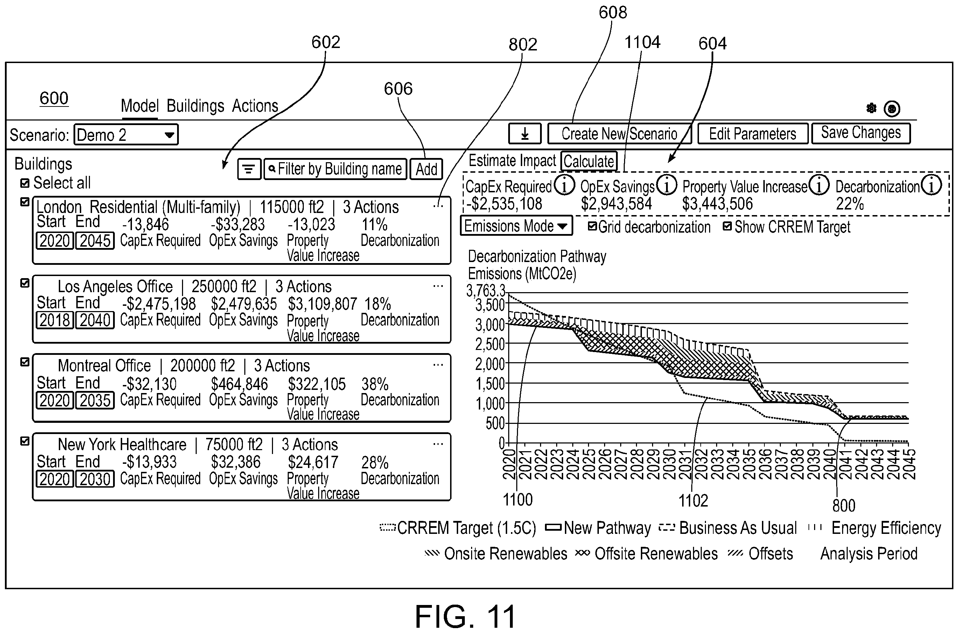

Referring to FIG. 11, the modeling interface 600 with a populated building pane 602 and a visualization pane 604 graphically presenting the BAU pathway 800, target pathway 1100, and decarbonization pathway 1102 is illustrated. Optionally the area between the BAU pathway 800 and the decarbonization pathway 1102 can be color-coded to reflect the respective contribution to the energy and/or emissions reduction of one or more of the selected decarbonization actions. In this particular example, the monetary outputs 1104 are displayed above the graph of the pathways, although other arrangements of the modeling interface 600 can also be used in other examples.

Referring back to FIG. 3, in step 310, the decarbonization forecasting device 102 determines whether a building or decarbonization action has been modified within the scenario. The buildings can be modified via the addition or removal of a building from the scenario, or adjustment of building data for a building, as described and illustrated in more detail above.

The decarbonization actions can be modified by selecting or deselecting decarbonization actions for particular buildings, or adjusting the action data for a decarbonization action, as also described and illustrated in more detail above. In particular, the modification of the action data can include a modification of one or more of the rules, a modification of a result of an application of one or more of the rules, or an addition or removal of a decarbonization action to or from, respectively, one or more of the buildings. If the decarbonization forecasting device 102 determines that a building or decarbonization action has been modified by a user via the modeling interface 600, then the Yes branch is taken to step 312.

In step 312, the decarbonization forecasting device 102 adjusts the decarbonization pathway 1102 and monetary outputs 1104 in the visualization pane 604 to reflect an energy or emissions impact of the modification received in step 310. Accordingly, the modeling interface 600 advantageously allows a user to adjust buildings and/or decarbonization actions in an editing pane 602 while visualizing the energy utilization, emissions, and/or monetary results of those adjustments automatically or in real-time in the visualization pane 604. Subsequent to adjusting the decarbonization pathway 1102 or monetary outputs 1104, or if the decarbonization forecasting device 102 determines that a building or decarbonization action has not been modified and the No branch is taken from step 310, then the decarbonization forecasting device 102 proceeds to step 314.

In step 314, the decarbonization forecasting device 102 determines whether an export request is received via the modeling interface 600. The export request can be received from one of the user devices 108(1)-108(n) and can be a request to generate a report that summarizes the current version of the scenario and can include the buildings and associated decarbonization actions that are part of the scenario at the time the export request is received, for example, although other types of information can be exported in other formats. If the decarbonization forecasting device 102 determines that an export request has been received, then the Yes branch is taken to step 316.

In step 316, the decarbonization forecasting device 102 generates and outputs a report based on the current version of the scenario. In some examples, the report can include recommendations generated based on the building and action data for achieving the energy and emissions threshold of the scenario data within the timeframe of the scenario data. For example, the decarbonization forecasting device 102 can provide an indication via the modeling interface 600 or the generated report, for example, of one or more decarbonization actions predicted to have the most potential in terms of return on investment (ROI) and/or progress toward the target pathway.

In other examples, the decarbonization forecasting device 102 can generate another report, in addition to or in place of the report including the exported data generated in step 316, that includes an action plan that is optimized for cost, decarbonization, and/or impact to asset value, for example. Optionally, the decarbonization forecasting device 102 can generate improved recommendations over time, as capital markets increasingly factor sustainability into transactions, based on feedback data. For example, feedback data regarding the impact of implemented decarbonization strategies or actions on rents, asset valuation, and cost of capital in addition to operating expenses, for example, can inform future recommendations for similar buildings and decarbonization actions.

Subsequent to generating and outputting the report in step 316, or if the decarbonization forecasting device 102 determines that an export request has not been received and the No branch is taken from step 314, then the decarbonization forecasting device 102 proceeds back to step 310. In other examples, one or more of steps 300-316 can be performed at the decarbonization forecasting device 102 and/or by the modeling interface 600 generated and provided by the decarbonization forecasting device 102. Additionally, one or more of steps 300-316 can be performed in a different order and/or in parallel for any number of user devices 108(1)-108(n) in other examples.

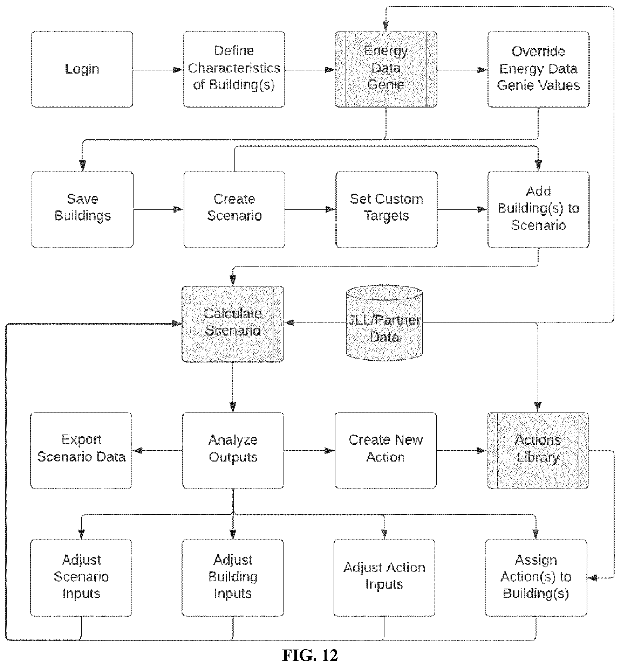

Referring to FIG. 12, a flow diagram of an exemplary method for commercial real estate decarbonization forecasting is illustrated. In this example, a user of one of the user devices 108(1)-108(n) submits a login request to the decarbonization forecasting device 102 (e.g., via the sustainability analytics application 112). Upon authenticating the login request, the decarbonization forecasting device 102 facilitates definition of characteristics of buildings and the ingest of building data. With the ingested building data, the decarbonization forecasting device 102 determines additional building data including baseline energy data, which is referred to in FIG. 12 as the energy data genie.

The baseline energy data can be overridden by a user that may have more accurate information regarding building energy utilization and/or emissions output. The buildings are then saved by the decarbonization forecasting device 102 in a library to be available for subsequent selection. In the next step, a scenario is created by a user, custom targets including energy and/or emissions thresholds and a timeframe are then set, and buildings are added to the created scenario from the stored library.

Then, the decarbonization forecasting device 102 calculates a scenario, which can include generating the BAU pathway 800 and target pathway 1100. Optionally, the decarbonization forecasting device 102 can interface via application programming interfaces (APIs) to third party data sources to inform the calculation of the scenario. The decarbonization forecasting device 102 then analyzes output via a generated modeling interface 600 and facilitates creation of new decarbonization actions and ingest of associated action data, which is then stored in an actions library. Optionally, the decarbonization forecasting device 102 can again interface via APIs to third party data sources to inform the action data for one or more of the decarbonization actions. For example, third party data can provide information regarding cost and/or impact of implementing decarbonization actions.

The decarbonization forecasting device 102 then facilitates assignment of one or more of the decarbonization actions from the actions library to one or more of the buildings selected as part of the current calculated scenario. Then, the decarbonization forecasting device 102 receives an adjustment of action, building, and/or scenario data (e.g., via the editing pane 602) and recalculates the scenario accordingly. The recalculation can include generating (or regenerating) a decarbonization pathway 1102 and/or monetary outputs 1106 that are graphically presented via a visualization pane 604, for example. In subsequent iterations, the outputs are analyzed by users and the scenario and/or other data is optionally exported, as described and illustrated in more detail above.

Accordingly, as described and illustrated by way of the examples herein, this technology provides an improved, interactive simulation and modeling interface that more effectively facilitates decarbonization forecasting and planning for commercial real estate portfolios. In particular, this technology advantageously models the future energy use intensity, GHG emissions intensity, and cash flows based on specified combinations of buildings and decarbonization actions allowing users to analyze and visualize the impact of changing different inputs. The modeling interface 600 layout advantageously allows users to always see the dashboard or visualization pane 604 while they change inputs in an adjacent pane. The interactive feedback provided to users via the modeling interface 600 when inputs are adjusted enables users to quickly understand the sensitivity of the scenario or simulation to those inputs.

Having thus described the basic concept of the invention, it will be rather apparent to those skilled in the art that the foregoing detailed disclosure is intended to be presented by way of example only, and is not limiting. Various alterations, improvements, and modifications will occur and are intended to those skilled in the art, though not expressly stated herein. These alterations, improvements, and modifications are intended to be suggested hereby, and are within the spirit and scope of the invention. Additionally, the recited order of processing elements or sequences, or the use of numbers, letters, or other designations therefore, is not intended to limit the claimed processes to any order except as may be specified in the claims. Accordingly, the invention is limited only by the following claims and equivalents thereto.

## Claims

1. A method for commercial real estate decarbonization forecasting, the method implemented by one or more decarbonization forecasting devices and comprising:
obtaining scenario data, building data for one or more buildings, and action data for decarbonization actions;
generating a business-as-usual (BAU) pathway based on the building data, a target pathway based on the scenario data, and a decarbonization pathway based on the action data and a received selection of one or more of the decarbonization actions associated with one or more of the buildings;
generating and outputting a modeling interface comprising an editing pane adjacent to a visualization pane, wherein the visualization pane graphically displays one or more monetary outputs and the energy or emissions difference between the BAU, target, and decarbonization pathways; and
updating the visualization pane to adjust one or more of the BAU, target, or decarbonization pathways and one or more of the monetary outputs based on a modification received via the editing pane of the scenario data, building data, or action data of one or more of the decarbonization actions to display an impact of the modification.

2. The method of claim 1, wherein the building data comprises baseline energy data for each of the buildings, the scenario data comprises an energy or emissions intensity threshold and an associated timeframe, and the action data comprises one or more rules for generating, for each of the decarbonization actions and based on the building data, a start date, an end date, a required capital expenditure, an operational expenditure savings, or an impact level.

3. The method of claim 2, wherein the modification of the action data comprises a modification of one or more of the rules, another modification of a result of an application of one or more of the rules, or an addition or removal of the decarbonization action to or from, respectively, at least one of the buildings.

4. The method of any of claims 1 to 3, further comprising updating the visualization pane to adjust the decarbonization pathway based on another modification of the building data received via the editing pane.

5. The method of claim 4, wherein the other modification of the building data comprises an addition of another building to a scenario or a removal of one of the building from the scenario.

6. The method of any of claims 1 to 5, further comprising generating one or more monetary outputs based on a portion of one or more of the building data, the action data for one or more of the decarbonization actions, or the scenario data, wherein the monetary outputs comprise a required capital expenditure, an operational expenditure savings, or a property value increase and the visualization pane is generated to include the monetary outputs.

7. A decarbonization forecasting device, comprising memory comprising programmed instructions stored thereon and one or more processors configured to execute the stored programmed instructions to carry out the method of any of claims 1 to 6.

8. A non-transitory computer readable medium having stored thereon instructions for commercial real estate decarbonization forecasting comprising executable code that, when executed by one or more processors, causes the one or more processors to carry out the method of any of claims 1 to 6.
